# EUROPÄISCHE PATENTSCHRIFT

(11) **EP 1 055 054 B1**
(45) Veröffentlichungstag und Bekanntmachung des Hinweises auf die Patenterteilung: **02.10.2002**
(21) Anmeldenummer: 99907521.1
(22) Anmeldetag: 08.02.1999
(51) Int. Cl.: F01N 3/08, F01N 3/20, F01N 3/22

(54) **ANORDNUNG UND VERFAHREN ZUM BETRIEB EINER ANORDNUNG ZUR UMSETZUNG WENIGSTENS EINER ABGASKOMPONENTE EINES ABGASSTROMES EINES VERBRENNUNGSMOTORS**
METHOD AND DEVICE FOR OPERATING A SYSTEM TO CONVERT AT LEAST ONE EXHAUST-GAS COMPONENT OF AN EXHAUST-GAS STREAM OF AN INTERNAL COMBUSTION ENGINE
DISPOSITIF ET PROCEDE POUR LE FONCTIONNEMENT D'UN AGENCEMENT PERMETTANT LA REACTION D'AU MOINS UN CONSTITUANT D'UN FLUX DE GAZ D'ECHAPPEMENT D'UN MOTEUR A COMBUSTION INTERNE

(30) Priorität: 13.02.1998 DE 19806033
(43) Veröffentlichungstag der Anmeldung: 29.11.2000
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE)
(74) Vertreter: Kahlhöfer, Hermann, Dipl.-Phys.
(86) Internationale Anmeldenummer: EP9900820
(87) Internationale Veröffentlichungsnummer: WO99041493

(56) Entgegenhaltungen:
- WO-A-94/17290
- WO-A-96/17157
- DE-A- 4 314 043
- JP-A- 6 093 849
- US-A- 5 315 824
- US-A- 5 373 696
- PATENT ABSTRACTS OF JAPAN vol. 095, no. 003, 28. April 1995 & JP 06 336915 A (NISSAN MOTOR CO LTD), 6. Dezember 1994

## Beschreibung

Die vorliegende Erfindung bezieht sich auf eine Anordnung zur Umsetzung wenigstens einer Abgaskomponente eines Abgasstromes eines Verbrennungsmotors sowie auf ein Verfahren zum Betrieb einer solchen Anordnung.

Zur Verringerung der Umweltbelastung durch Abgase von Verbrennungsmotoren, insbesondere von Verbrennungsmotoren die in Kraftfahrzeugen eingesetzt werden, sind unterschiedliche Konzepte entwickelt worden. Diese Konzepte streben auch die Einhaltung immer niedrigerer Grenzwerte für den Schadstoffausstoß an.

Problematisch bei der Umsetzung wenigstens einer Abgaskomponente eines Abgasstromes ist der Zeitabschnitt, in dem die Abgasreinigungskomponenten ihre Betriebstemperatur noch nicht erreicht haben. Dies ist im wesentlichen während einer sogenannten Kaltstartphase eines Verbrennungsmotors der Fall. Während der Kaltstartphase bei Verbrennungsmotoren enthält das Abgas größere Mengen von Kohlenwasserstoffen, da ein Verbrennungsmotor üblicherweise in der Kaltstartphase mit einem Überangebot an Verbrennungskraftstoff läuft. Neben den unverbrannten Kohlenwasserstoffen enthält das Abgas auch Kohlenmonoxyd. Während der Kaltstartphase wird angestrebt, daß eine Oxidation der unverbrannten Kohlenwasserstoffe und des Kohlenmonoxyds stattfindet.

Nach dem Übergang von der Kaltstartphase in den Lastbereich des Verbrennungsmotors werden die Abgase sowohl oxidiert als auch reduziert, wie es beispielsweise bei den Stickoxyden (NOₓ) der Fall ist.

Es ist bekannt, daß für den Lastbereich eine katalytisch wirkende Einrichtung verwendet wird, die im allgemeinen als Dreiwege-Katalysator bezeichnet wird. Dieser Dreiwege-Katalysator wirkt zwar im Lastbereich des Verbrennungsmotors ausgezeichnet, kann jedoch die während der Kaltstartphase auftretenden unverbrannten Kohlenwasserstoffe sowie das Kohlenmonoxyd nicht in einem hinreichenden Maße umsetzen, so daß es während der Kaltstartphase zu einem erhöhten Ausstoß von Kohlenwasserstoffen und Kohlenmonoxyd kommt.

Es ist beispielsweise durch die EP 0 485 179 ein Abgasreinigungssystem bekannt, das zahlreiche Komponenten enthält, hierbei kann es sich beispielsweise um einen Dreiwege-Katalysator, einen Kohlenwasserstoffadsorber und um einen beheizbaren Wabenkörper handeln. Die Anordnung der einzelnen Komponenten kann unterschiedlich sein.

Durch die WO 94/17290 ist beispielsweise ein katalytischer Konverter mit einer elektrischen Beheizung bekannt, der zumindest in Teilbereichen eine katalytisch aktive Beschichtung aufweist. Der Konverter weist in der Strömungsrichtung betrachtet hintereinander liegende elektrisch beheizbare Teilbereiche auf. Die WO 94/17290 geht dabei davon aus, daß eine nennenswerte katalytische Umsetzung des Abgases erst ab Temperaturen von etwa 300 bis 450 °C stattfindet.

Sowohl durch die DE-A1-23 33 092 als auch durch die US-A-5,417,062 ist ferner bekannt, einen elektrisch beheizbaren Wabenkörper zwischen zwei katalytisch wirkenden Wabenkörpern anzuordnen, wodurch eine schnellere Aufheizung der katalytisch wirkenden Körper erreicht werden soll.

Ausgehend von diesem Stand der Technik liegt der vorliegenden Erfindung die Zielsetzung zugrunde, eine Anordnung zur Umsetzung wenigstens einer Abgaskomponente eines Abgasstromes eines Verbrennungsmotors anzugeben, durch die eine Reduktion von Schadstoffkomponenten, insbesondere von Kohlenwasserstoffen, während einer Kaltstartphase erreicht wird. Ein weiteres Ziel der Erfindung ist es, ein Verfahren zum Betrieb der Anordnung anzugeben, durch das die Anordnung eine hohe Effektivität erreicht.

Diese Zielsetzung wird durch eine Anordnung mit den Merkmalen des Anspruchs 1 bzw. durch ein Verfahren zum Betrieb einer Anordnung mit den Merkmalen des Anspruchs 21 erreicht. Vorteilhafte und besonders bevorzugte Ausrührungsformen und Ausgestaltungen sind in den jeweils abhängigen Ansprüchen angegeben.

Die erfindungsgemäße Anordnung zur Umsetzung wenigstens einer Abgaskomponente eines Abgasstromes eines Verbrennungsmotors weist eine erste katalytisch wirkende Einrichtung und eine zweite Einrichtung auf, wobei die zweite Einrichtung in Strömungsrichtung des Abgases betrachtet der ersten Einrichtung nachgeordnet ist.

Bei der ersten katalytisch wirkenden Einrichtung handelt es sich beispielsweise um einen Dreiwege-Katalysator, der einen sogenannten Hauptkatalysator bildet. Dieser Hauptkatalysator beziehungsweise die erste katalytisch wirkende Einrichtung dient im wesentlichen der katalytischen Umsetzung wenigstens einer Abgaskomponente eines Abgases eines Verbrennungsmotors, wenn der Verbrennungsmotor sich im Lastbereich befindet. Während der Kaltstartphase leistet die erste katalytisch wirkende Einrichtung nur einen sehr geringen oder gar keinen Beitrag zur Umsetzung wenigstens einer Abgaskomponente eines Abgasstromes, da die erste Einrichtung noch die zur katalytischen Umsetzung wenigstens einer Abgaskomponente notwendige Temperatur nicht erreicht hat.

Die zweite Einrichtung, die auf die erste Einrichtung folgt, weist in Strömungsrichtung des Abgases hintereinander mindestens einen elektrisch beheizbaren ersten Wabenkörper, einen zweiten Wabenkörper der wenigstens eine Beschichtung aufweist, die zumindest teilweise wenigstens Kohlenwasserstoffe adsorbierend ist, und einen dritten, elektrisch beheizbaren Wabenkörper auf. Durch diese Anordnung der Wabenkörper mit ihren unterschiedlichen Funktionalitäten wird während der Kaltstartphase eine Reduzierung des Ausstoßes von Schadstoffen, insbesondere von Kohlenwasserstoffen, erreicht.

Dadurch, daß der zweite Wabenkörper eine Kohlenwasserstoff adsorbierende Beschichtung aufweist, werden die im Abgas enthaltenen Kohlenwasserstoffe wenigstens teilweise adsorbiert, wodurch der Ausstoß an Kohlenwasserstoffen verringert wird. Dadurch, daß dem Kohlenwasserstoffe adsorbierenden Wabenkörper ein dritter Wabenkörper nachgeordnet ist, der elektrisch beheizbar ist, wird erreicht, daß die von dem zweiten Wabenkörper nicht adsorbierten Kohlenwasserstoffe beziehungsweise die bereits desorbierten Kohlenwasserstoffe vollständig verbrannt werden. Diese vollständige Verbrennung wird insbesondere dann erreicht, wenn am dritten Wabenkörper lediglich die desorbierten Kohlenwasserstoffe zum dritten Wabenkörper gelangen. Dies ist der Fall, da die Desorption der Kohlenwasserstoffe ein relativ langsamer Vorgang ist und der dritte, elektrisch beheizbare Wabenkörper sehr schnell seine Betriebstemperatur erreicht.

Dadurch, daß dem zweiten Wabenkörper, der eine Kohlenwasserstoff adsorbierende Beschichtung aufweist, ein erster Wabenkörper vorgeordnet ist, der elektrisch beheizbar ist, wird auch erreicht, daß der zweite Wabenkörper relativ schnell aufgeheizt wird. Bei einem sehr schnellen Temperaturanstieg in dem zweiten Wabenkörper ist dann die Resorptionsrate des Kohlenwasserstoffes die für die katalytische Umsetzung der unverbrannten Kohlenwasserstoffe bestimmende Größe, da die Desorption langsamer abläuft als eine katalytische Umsetzung der Kohlenwasserstoffe.

Um einen möglichst geringen Ausstoß von Kohlenwasserstoffen während der Kaltstartphase zu erreichen wird auch vorgeschlagen, daß der erste Wabenkörper eine Beschichtung aufweist, die wenigstens Kohlenwasserstoffe adsorbiert. Hierdurch wird eine höhere Kohlenwasserstoffadsorption erreicht.

Nach einer weiteren vorteilhaften Ausgestaltung der Anordnung wird vorgeschlagen, daß der erste Wabenkörper eine wenigstens katalytisch aktive Beschichtung aufweist, die eine Oxidation fördert. Im Hinblick darauf, das der erste Wabenkörper elektrisch beheizbar ist und die Betriebstemperatur relativ schnell erreicht, wird durch die katalytisch aktive Beschichtung auch eine Reduktion des Kohlenmonoxyds erreicht.

Entsprechend dieser vorteilhaften Ausgestaltung der Anordnung wird auch vorgeschlagen, daß der zweite Wabenkörper eine wenigstens katalytisch aktive Beschichtung aufweist, die eine Oxidation fördert.

Im Hinblick darauf, daß der dritte Wabenkörper relativ schnell seine Betriebstemperatur erreicht, d.h. die Temperatur bei der eine katalytische Umsetzung wenigstens einer Abgaskomponente eines Abgases erfolgt, wird vorgeschlagen, daß der dritte Wabenkörper eine wenigstens katalytisch aktive Beschichtung aufweist, die eine Oxidation und gegebenenfalls zusätzlich eine Reduktion fördert.

Um möglichst schnell einen Temperaturanstieg wenigstens des zweiten Wabenkörpers, der eine Kohlenwasserstoffe adsorbierende Beschichtung aufweist, zu erreichen wird vorgeschlagen, daß dieser Wabenkörper eine geringe Wärmespeicherkapazität aufweist. Hierdurch wird auch erreicht, daß nur ein geringer Wärmeaustausch zwischen dem Abgas und dem Wabenkörper stattfindet, so daß das Abgas keine oder nur eine sehr geringe Abkühlung erfährt, wodurch nur eine geringe Wärmezufuhr durch die beiden beheizbaren Wabenkörper notwendig ist um eine Reduktion der Schadstoffemission zu erreichen.

Vorzugsweise wird die geringe Wärmespeicherkapazität dadurch erreicht, daß der Wabenkörper aus einem Blech gebildet ist, das eine Dicke von 15 bis 65 µm, vorzugsweise von 30 µm, aufweist.

Zur Vereinfachung der Montage der Anordnung wird vorgeschlagen, daß die zweite Einrichtung eine Baueinheit bildet.

Insbesondere wird vorgeschlagen, daß der erste Wabenkörper und/oder der dritte Wabenkörper mittels geeigneter, elektrisch isolierender Haltemittel so mit dem zweiten Wabenkörper verbunden ist beziehungsweise sind, daß dieser beziehungsweise diese vom zweiten Wabenkörper gehaltert werden. Solche Mittel sind beispielsweise durch die DE-A1-44 34 673.5 bekannt.

Um eine Oxidation wenigstens einer Abgaskomponente, insbesondere um eine Oxidation der unverbrannten Kohlenwasserstoffe, zu erreichen, wird nach einer weiteren vorteilhaften Ausgestaltung der Erfindung vorgeschlagen, daß in einem Leitungsabschnitt, der die erste Einrichtung und die zweite Einrichtung verbindet, wenigstens eine Sekundärluft-Leitung mündet. Durch die Sekundärluft-Leitung kann Sekundärluft in den Abgasstrom eingeleitet werden, so daß ausreichend Sauerstoff für eine Oxidation der Kohlenwasserstoffe vorhanden ist.

Zur hinreichenden Bereitstellung von Sauerstoff beziehungsweise Luft für die Umsetzung der unverbrannten Kohlenwasserstoffe wird vorgeschlagen, daß zwischen der Sekundärluft-Leitung und der zweiten Einrichtung ein Sauerstoff-Sensor angeordnet ist. Ein solcher Sauerstoff-Sensor wird auch als A-Sonde (Lambda-Sonde) bezeichnet. Durch sie kann der Sauerstoffgehalt des in die zweite Einrichtung eintretenden Abgasstroms bestimmt werden.

Entsprechend wird vorgeschlagen, daß der Sauerstoff-Sensor mit einer Steuereinheit verbunden ist, durch die ein über die Sekundärluft-Leitung in das Abgas zugeführter Volumenstrom einer Sekundärluft gesteuert werden kann.

Erfolgt unmittelbar nach der Leerlaufphase ein Vollastbetrieb des Verbrennungsmotors, so besteht die Gefahr, daß durch den großen Abgasvolumenstrom die katalytische Reaktionen im Bereich des zweiten Wabenkörpers unterbrochen wird, da der Abgasstrom sich in und hinter der ersten Einrichtung abkühlt und so die Temperatur in der zweiten Einrichtung unter die zur katalytischen Reaktion notwendigen Temperatur absinkt. Um dies zu vermeiden wird vorgeschlagen, den Abgasstrom nur teilweise über die zweite Einrichtung zu führen. Im Konkreten wird vorgeschlagen, daß eine Bypass-Leitung vorgesehen wird, durch die wenigstens ein Teil des Abgases an der zweiten Einrichtung vorbeigeführt werden kann. In der Bypass-Leitung sind Mittel angeordnet, durch die der Strömungsquerschnitt der Bypass-Leitung veränderbar ist, wodurch eine gezielte Volumenstrom-Änderung in der zweiten Einrichtung erreicht wird

Die elektrisch beheizbaren Wabenkörper bilden Energieverbraucher. Um einen möglichst geringen Energieverbrauch der elektrisch beheizbaren Wabenkörper zu erreichen, wird vorgeschlagen, daß eine Temperaturmeßeinrichtung vorgesehen ist, durch die eine Temperaturmessung des Abgasstromes hinter dem zweiten Wabenkörper, vorzugsweise zwischen dem zweiten und dem dritten Wabenkörper, erfolgt. In Abhangigkeit von der gemessenen Temperatur kann entschieden werden, wann die Kohlenwasserstoffe im zweiten Wabenkörper desorbiert sind und damit die elektrische Beheizung des ersten und/oder des zweiten Wabenkörpers abgeschaltet werden kann.

Zur weiteren Verbesserung der Umsetzung von wenigstens einer Abgaskomponente eines Abgases wird vorgeschlagen, daß in einer Abgasleitung, durch die die erste Einrichtung mit einem Verbrennungsmotor verbunden ist, wenigstens eine Sekundärluft-Leitung mündet, durch die Sekundärluft in den Abgasstrom zuführbar ist.

Zur Bestimmung des Volumenstroms der Sekundärluft wird vorgeschlagen, daß ein Sauerstoff-Sensor vor der Sekundärluft-Leitung in der Abgasleitung angeordnet ist.

Vorzugsweise ist der Sauerstoff-Sensor mit einer Steuereinheit verbunden, durch die eine Gemischbildung des Verbrennungsmotors gesteuert wird.

Beschichtungen, insbesondere Kohlenwasserstoffadsorber, können durch hohe Temperaturen geschädigt werden. Im Hinblick darauf, daß die Funktionsfähigkeit der erfindungsgemäßen Anordnung im wesentlichen unabhängig von der Temperatur des Abgases ist, kann die zweite Einrichtung relativ weit entfernt vom Verbrennungsmotor angeordnet werden. Hierdurch wird ein Risiko einer Beschädigung der Beschichtungen verringert. Insbesondere wird daher vorgeschlagen, daß die zweite Einrichtung in Strömungsrichtung des Abgases betrachtet so weit von einem Verbrennungsmotor entfernt angeordnet ist, daß bei im wesentlichen allen Betriebsbedingungen des Verbrennungsmotors die Temperatur innerhalb der zweiten Einrichtung im wesentlichen unter 700 °C liegt.

Gemäß einem weiteren erfinderischen Gedanken wird ein Verfahren zum Betrieb einer Anordnung nach einem der Ansprüche 1-20 zur Umsetzung wenigstens einer Abgaskomponente eines Verbrennungsmotors vorgeschlagen, bei dem eine elektrische Beheizung eines ersten und eines dritten Wabenkörpers spätestens ab dem Start des Verbrennungsmotors erfolgt. Hierdurch wird eine schnelle Aufheizung der beiden Wabenkörper erreicht, insbesondere des in Strömungsrichtung des Abgases betrachtet letzten Wabenkörpers, wodurch auch eine Verringerung der Schadstoffemission eintritt.

Insbesondere wird vorgeschlagen, daß eine Ist-Temperatur des Abgasstromes hinter dem zweiten Wabenkörper, vorzugsweise zwischen dem zweiten und dem dritten Wabenkörper bestimmt und die elektrische Beheizung des ersten und/oder des dritten Wabenkörpers in Abhängigkeit von einem Vergleich zwischen der Ist-Temperatur und einer Soll-Temperatur abgeschaltet wird. Die Ist-Temperatur hinter dem zweiten Wabenkörper gibt insbesondere eine Auskunft darüber, ob alle Kohlenwasserstoffe am zweiten Wabenkörper desorbiert sind und einer exothermen Umsetzung unterzogen worden sind.

Nach einer weiteren vorteilhaften Ausgestaltung des Verfahrens wird vorgeschlagen, daß eine Ist-Temperatur des Abgasstromes hinter dem zweiten Wabenkörper, vorzugsweise zwischen dem zweiten und dem dritten Wabenkörper, bestimmt und ein Volumenstrom einer Sekundärluft zu der zweiten Einrichtung zusätzlich in Abhängigkeit von einem Vergleich zwischen der Ist-Temperatur und einer Soll-Temperatur zugeführt wird. Hierdurch wird sichergestellt, daß ausreichend Sauerstoff zur Verfügung steht, der zur Umsetzung wenigstens einer Abgaskomponente, insbesondere der Kohlenwasserstoffe, notwendig ist.

Erfindungsgemäß wird ein stöchiometrisches Verhältnis des Abgases im wesentlichen am Eintritt in die zweite Einrichtung bestimmt. Ein Volumenstrom der Sekundärluft zu der zweiten Einrichtung wird, in Abhängigkeit von einem Vergleich zwischen dem bestimmten stöchiometrischen Verhältnis und einem vorgegebenen stöchiometrischen Verhältnis, zugeführt. Zur Bestimmung des stöchiometrischen Verhältnisses wird vorgeschlagen, daß dieses auf der Grundlage einer Messung mittels eines Sauerstoff-Sensors erfolgt.

Wie bereits vorstehend ausgeführt besteht die Gefahr, daß beim Übergang von einer Leerlaufphase des Verbrennungsmotors in einen Vollastbereich die katalytische Reaktion durch den großen Abgasvolumenstrom in der zweiten Einrichtung unterbrochen wird. Um dies zu vermeiden wird vorgeschlagen, daß in Abhängigkeit von einer Drehzahl des Verbrennungsmotors lediglich ein Teil eines Abgases der zweiten Einrichtung zugeführt wird. Der andere Teil wird über eine Bypass-Leitung an der zweiten Einrichtung vorbeigeführt.

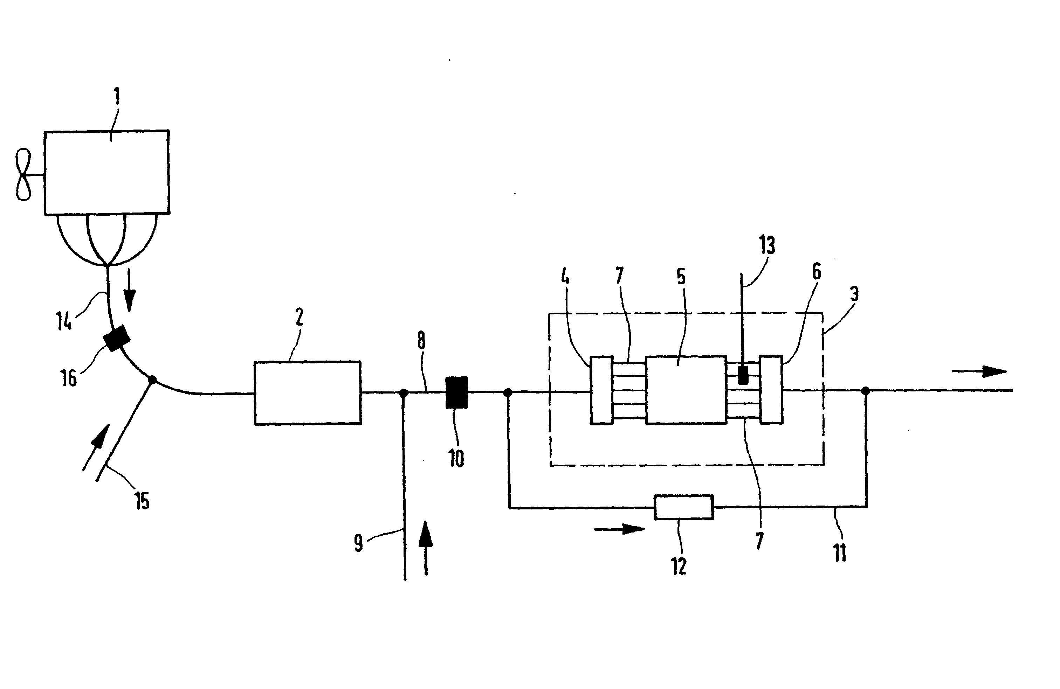

Weitere Vorteile und Einzelheiten der Erfindung werden anhand eines in der Zeichnung dargestellten bevorzugten Ausführungsbeispiels erläutert. Die einzige Figur zeigt schematisch die erfindungsgemäße Anordnung in Verbindung mit einem Verbrennungsmotor.

Ein Verbrennungsmotor 1 ist mit einer Abgasleitung 14 verbunden. Innerhalb der Abgasleitung 14 ist eine erste katalytisch wirkende Einrichtung 2 angeordnet. Bei der ersten katalytisch wirkenden Einrichtung 2 handelt es sich vorzugsweise um einen Dreiwege-Katalysator, der die gesamte Abgasreinigung nach der Kaltstartphase übernehmen kann. Bei dem Dreiwege-Katalysator der ersten Einrichtung 2 kann es sich um einen monolithischen Wabenkörper, insbesondere um einen metallischen Wabenkörper handeln, der mit einer entsprechenden katalytisch wirkenden Beschichtung versehen ist.

Auf die erste Einrichtung 2 folgt in Strömungsrichtung des Abgases betrachtet eine zweite Einrichtung 3 zur Umsetzung wenigstens einer Abgaskomponente eines Abgases des Verbrennungsmotors 1.

Die zweite Einrichtung 3 weist in Strömungsrichtung des Abgases betrachtet, hintereinander mindestens
- einen ersten, elektrisch beheizbaren Wabenkörper 4,
- einen zweiten Wabenkörper 5, der wenigstens eine Beschichtung aufweist die zumindest teilweise Kohlenwasserstoffe adsorbiert, und
- einen dritten, elektrisch beheizbaren, Wabenkörper 6 auf.

Der erste Wabenkörper 4 weist vorzugsweise eine Beschichtung auf, die zumindest teilweise Kohlenwasserstoffe adsorbierend ist. Gegebenenfalls kann der erste Wabenkörper 4 wenigstens eine katalytisch aktive Beschichtung aufweisen, die eine Oxidation fördert.

Der zweite Wabenkörper 5 weist vorzugsweise neben einer Kohlenwasserstoffe adsorbierenden Beschichtung auch eine katalytisch aktive Beschichtung auf, die eine Oxidation fördert.

Der dritte Wabenkörper 6 weist vorzugsweise eine wenigstens katalytisch aktive Beschichtung auf, die eine Oxidation fördert. Zusätzlich kann der Wabenkörper auch über eine Beschichtung verfügen, die eine Reduktion fördert.

Der erste, zweite und der dritte Wabenkörper 4, 5, 6 bilden vorzugsweise eine Baueinheit. Schematisch sind Haltemittel 7 angedeutet, die dazu geeignet sind den ersten Wabenkörper 4 beziehungsweise den dritten Wabenkörper 6 mit dem zweiten Wabenkörper 5 zu verbinden, so daß der erste Wabenkörper 4 und der dritte Wabenkörper 6 am zweiten Wabenkörper 5 gehaltert werden. Insbesondere handelt es sich bei den Haltemitteln 7 um elektrisch isolierende Mittel, so daß zwischen den einzelnen Wabenkörpern 4, 5, 6 keine elektrische Verbindung vorliegt.

In einem Leitungsabschnitt 8, der die erste Einrichtung 2 und die zweite Einrichtung 3 miteinander verbindet, ist eine Sekundärluft-Leitung 9 angeordnet, die in den Leitungsabschnitt 8 mündet. Durch die Sekundärluft-Leitung 9 kann Sekundärluft in den Abgasstrom, der über die Abgasleitung 14 und den Leitungsabschnitt 8 in die zweite Einrichtung 3 gelangt, zugeführt werden. Zwischen der ersten Einrichtung 2 und der zweiten Einrichtung 3 ist ein Sauerstoff-Sensor 10 angeordnet. In dem dargestellten Ausführungsbeispiel ist der Sauerstoff-Sensor 10 in Strömungsrichtung eines Abgases betrachtet hinter der Mündung der Sekundärluft-Leitung 9 angeordnet.

Der Sauerstoff-Sensor 10 kann mit einer nicht dargestellten Steuereinheit verbunden sein, durch die ein Volumenstrom der in das Abgas zugeführten Luft gesteuert werden kann.

Das in der Zeichnung dargestellte Ausführungsbeispiel zeigt auch, daß eine Bypass-Leitung 11 vorgesehen ist, durch die wenigstens ein Teil des Abgases an der zweiten Einrichtung 3 vorbeigeführt werden kann. Die Bypass-Leitung ist zwischen der ersten Einrichtung 2 und der zweiten Einrichtung 3 angeordnet. Mit dem Bezugszeichen 12 sind Mittel bezeichnet, durch die der Strömungsquerschnitt der Bypass-Leitung veränderbar ist. Hierbei kann es sich beispielsweise um eine Drosselklappe oder ein Ventil handeln. Die Mittel 12 sind vorzugsweise mit einer Steuereinheit verbunden, durch die die Mittel 12 so angesteuert werden, daß diese den Strömungsquerschnitt der Bypass-Leitung 11 derart verändern, daß nur vorgegebene Volumenströme an der zweiten Einrichtung 3 vorbeigeleitet werden.

Der erste Wabenkörper und der dritte Wabenkörper 4, 6 sind elektrisch beheizbar. Um ein Abschalten der elektrischen Beheizung des ersten und/oder des dritten Wabenkörpers 4, 6 unter bestimmten Betriebsbedingungen zu gewährleisten, weist die zweite Einrichtung 3 eine Temperaturmeßeinrichtung 13 auf. Die Temperaturmeßeinrichtung 13 ist vorzugsweise zwischen dem zweiten Wabenkörper 5 und dem dritten Wabenkörper 6 angeordnet. Über die Temperaturmeßeinrichtung 13 kann eine Ist-Temperatur des Abgasstromes hinter dem zweiten Wabenkörper 5 bestimmt werden. In Abhängigkeit von einem Vergleichsergebnis zwischen der Ist-Temperatur und einer Soll-Temperatur des Abgases kann die elektrische Beheizung des ersten und/oder dritten Wabenkörpers 4, 6 abgeschaltet werden. Hierzu sind die elektrischen Beheizungen und die Temperaturmeßeinrichtung mit einer entsprechenden Einrichtung elektrisch verbunden.

In dem dargestellten Ausführungsbeispiel ist eine Sekundärluft-Leitung 15 vorgesehen, die vor der ersten Einrichtung 2 mündet. Es ist auch ein Sauerstoff-Sensor 16 vorgesehen, der vor der ersten Einrichtung 2 angeordnet ist. Der Sauerstoff-Sensor 16 dient im wesentlichen zur Einstellung des Gemisches für den Verbrennungsmotor 1.

### Bezugszeichenliste

- 1: Verbrennungsmotor
- 2: erste Einrichtung
- 3: zweite Einrichtung
- 4: erster Wabenkörper
- 5: zweiter Wabenkörper
- 6: dritter Wabenkörper
- 7: Haltemittel
- 8: Leitungsabschnitt
- 9: Sekundärluft-Leitung
- 10: Sauerstoff-Sensor
- 11: Bypass-Leitung
- 12: Mittel
- 13: Temperaturmeßeinrichtung
- 14: Abgasleitung
- 15: Sekundärluft-Leitung
- 16: Sauerstoff-Sensor

## Patentansprüche

1. Anordnung zur Umsetzung wenigstens einer Abgaskomponente eines Abgasstromes eines Verbrennungsmotors (1) mit
einer ersten katalytisch wirkenden Einrichtung (2),
einer zweiten Einrichtung (3), die in Strömungsrichtung des Abgases betrachtet der ersten Einrichtung (2) nachgeordnet ist,
wobei die zweite Einrichtung (3) in Strömungsrichtung des Abgases hintereinander mindestens einen ersten, elektrisch beheizbaren, Wabenkörper (4), einen zweiten Wabenkörper (5), der wenigstens eine Beschichtung aufweist, die zumindest teilweise wenigstens Kohlenwasserstoffe adsorbierend ist, und einen dritten, elektrisch beheizbaren Wabenkörper (6) aufweist,
**dadurch gekennzeichnet, daß**
in einem Leitungsabschnitt (8), der die erste Einrichtung (2) und die zweite Einrichtung (3) verbindet, wenigstens eine Sekundärluft-Leitung (9) mündet und ein Sauerstoff-Sensor (10) zwischen der Sekundärluft-Leitung (9) und der zweiten Einrichtung (3) angeordnet ist.

2. Anordnung nach Anspruch 1, **dadurch gekennzeichnet, daß** der erste Wabenkörper (4) eine wenigstens Kohlenwasserstoffe adsorbierende Beschichtung aufweist.

3. Anordnung nach Anspruch 1 oder 2, **dadurch gekennzeichnet, daß** der erste Wabenkörper (4) eine wenigstens katalytisch aktive Beschichtung aufweist, die eine Oxidation fördert.

4. Anordnung nach Anspruch 1, 2 oder 3, **dadurch gekennzeichnet, daß** der zweite Wabenkörper (5) eine wenigstens katalytisch aktive Beschichtung aufweist, die eine Oxidation fördert.

5. Anordnung nach einem der Ansprüche 1 bis 4, **dadurch gekennzeichnet, daß** der dritte Wabenkörper (6) eine wenigstens katalytisch aktive Beschichtung aufweist, die eine Oxidation fördert.

6. Anordnung nach einem der Ansprüche 1 bis 4, **dadurch gekennzeichnet, daß** der dritte Wabenkörper (6) eine katalytisch aktive Beschichtung aufweist, die eine Oxidation und gegebenenfalls zusätzlich eine Reduktion fördert.

7. Anordnung nach einem der Ansprüche 1 bis 6, **dadurch gekennzeichnet, daß** wenigstens der zweite Wabenkörper (5) eine so geringe Wärmespeicherkapazität aufweist, daß das Abgas keine oder nur eine sehr geringe Abkühlung durch Wärmeaustausch mit dem Wabenkörper erfährt.

8. Anordnung nach Anspruch 7, **dadurch gekennzeichnet, daß** wenigstens der zweite Wabenkörper (5) aus wenigstens einem, zumindest teilweise strukturierten Blech gebildet ist.

9. Anordnung nach Anspruch 8, **dadurch gekennzeichnet, daß** das Blech eine Dicke von 15 bis *65* µm, vorzugsweise 30 µm, aufweist.

10. Anordnung nach einem der Ansprüche 1 bis 9, **dadurch gekennzeichnet, daß** die zweite Einrichtung (3) eine Baueinheit bildet.

11. Anordnung nach Anspruch 10, **dadurch gekennzeichnet, daß** der erste Wabenkörper (4) und/oder der dritte Wabenkörper (6) mittels geeigneter, elektrisch isolierender Haltemittel (7) so mit dem zweiten Wabenkörper (5) verbunden ist bzw. sind, daß dieser bzw. diese vom zweiten Wabenkörper (5) gehaltert wird bzw. werden.

12. Anordnung nach Anspruch 1, **dadurch gekennzeichnet, daß** der Sauerstoff-Sensor (10) mit einer Steuereinheit verbunden ist, durch die ein über die Sekundärluft-Leitung (9) in das Abgas zugeführter Volumenstrom einer Sekundärluft gesteuert wird.

13. Anordnung nach einem der Ansprüche 1 bis 12, **dadurch gekennzeichnet, daß** eine Bypass-Leitung (11) vorgesehen ist, durch die wenigstens ein Teil des Abgases an der zweiten Einrichtung (3) vorbeigeführt werden kann, wobei die Bypass-Leitung (11) Mittel (12) aufweist, durch die der Strömungsquerschnitt der Bypass-Leitung (11) veränderbar ist.

14. Anordnung nach einem der Ansprüche 1 bis 13, **dadurch gekennzeichnet, daß** eine Temperaturmeßeinrichtung (13) vorgesehen ist, mittels der die Temperatur des Abgasstromes hinter dem zweiten Wabenkörper (5), vorzugsweise zwischen dem zweiten (5) und dem dritten (6) Wabenkörper, meßbar ist.

15. Anordnung nach einem der Ansprüche 1 bis 14, **dadurch gekennzeichnet, daß** in eine Abgasleitung (14), durch die die erste Einrichtung (2) mit einem Verbrennungsmotor (1) verbunden ist, wenigstens eine Sekundärluft-Leitung (15) mündet, durch die Sekundärluft in den Abgasstrom zuführbar ist.

16. Anordnung nach Anspruch 15, **dadurch gekennzeichnet, daß** ein Sauerstoff-Sensor (16) vor der Sekundärluft-Leitung (15) in der Abgasleitung (14) angeordnet ist.

17. Anordnung nach Anspruch 16, **dadurch gekennzeichnet, daß** der Sauerstoff-Sensor (16) mit einer Steuereinheit verbunden ist, durch die eine Gemischbildung des Verbrennungsmotors (1) gesteuert wird.

18. Anordnung nach einem der Ansprüche 1 bis 17, **dadurch gekennzeichnet, daß** die zweite Einrichtung (3) in Strömungsrichtung des Abgases betrachtet soweit von einem Verbrennungsmotor (1) entfernt angeordnet ist, daß bei im wesentlichen allen Betriebsbedingungen des Verbrennungsmotors (1) die Temperatur innerhalb der zweiten Einrichtung (3) im wesentlichen unter 700 °C liegt.

19. Verfahren zum Betrieb einer Anordnung nach einem der Ansprüche 1 bis 18 zur Umsetzung wenigstens einer Abgaskomponente eines Verbrennungsmotors (1), bei dem eine elektrische Beheizung eines ersten und eines dritten Wabenkörpers (4, 6) spätestens ab dem Start des Verbrennungsmotors (1) erfolgt, bei dem ein stöchiometrisches Verhältnis des Abgasstromes im wesentlichen am Eintritt in die zweite Einrichtung (3) durch einen zwischen einer Sekundärluft-Leitung (9) und der zweiten Einrichtung (3) angeordneten Sauerstoff-Sensor (10) bestimmt wird und ein Volumenstrom der Sekundärluft zu der zweiten Einrichtung (3) in Abhängigkeit von einem Vergleich zwischen dem bestimmten stöchiometrischen Verhältnis und einem vorgegebenen stöchiometrischen Verhältnis zugeführt wird.

20. Verfahren nach Anspruch 19, bei dem eine Ist-Temperatur des Abgasstromes hinter dem zweiten Wabenkörper (5), vorzugsweise zwischen dem zweiten (5) und dem dritten (6) Wabenkörper, bestimmt und die elektrische Beheizung des ersten und/oder des dritten Wabenkörpers (4, 6) in Abhängigkeit von einem Vergleich zwischen der Ist-Temperatur und einer Soll-Temperatur abgeschaltet wird.

21. Verfahren nach Anspruch 19 oder 20, bei dem eine Ist-Temperatur des Abgasstromes hinter dem zweiten Wabenkörper (5), vorzugsweise zwischen dem zweiten (5) und dem dritten (6) Wabenkörper, bestimmt und ein Volumenstrom einer Sekundärluft zu der zweiten Einrichtung (3) in Abhängigkeit von einem Vergleich zwischen der Ist-Temperatur und einer Soll-Temperatur zugeführt wird.

22. Verfahren nach einem der Ansprüche 19 bis 21, bei dem in Abhängigkeit von einer Drehzahl des Verbrennungsmotors (1) lediglich ein Teil des Abgases der zweiten Einrichtung (3) zugeführt wird.

## Claims

1. An arrangement for converting at least one exhaust gas component of an exhaust gas flow from an internal combustion engine (1) comprising
a first catalytically active device (2),
a second device (3) which is arranged downstream of the first device (2) in the direction of flow of the exhaust gas,
wherein the second device (3) has in succession in the direction of flow of the exhaust gas at least a first electrically heatable honeycomb body (4), a second honeycomb body (5) having at least one coating which is at least partially at least hydrocarbon-adsorbent, and a third electrically heatable honeycomb body (6),
**characterised in that**
at least one secondary air line (9) opens in a line portion (8) connecting the first device (2) and the second device (3), and an oxygen sensor is arranged between the secondary air line (9) and the second device (3).

2. An arrangement according to claim 1 **characterised in that** the first honeycomb body (4) has an at least hydrocarbon-adsorbent coating.

3. An arrangement according to claim 1 or claim 2 **characterised in that** the first honeycomb body (4) has an at least catalytically active coating which promotes oxidation.

4. An arrangement according to claim 1, claim 2 or claim 3 **characterised in that** the second honeycomb body (5) has an at least catalytically active coating which promotes oxidation.

5. An arrangement according to one of claims 1 to 4 **characterised in that** the third honeycomb body (6) has an at least catalytically active coating which promotes oxidation.

6. An arrangement according to one of claims 1 to 4 **characterised in that** the third honeycomb body (6) has a catalytically active coating which promotes oxidation and possibly additionally reduction.

7. An arrangement according to one of claims 1 to 6 **characterised in that** at least the second honeycomb body (5) has such a low heat storage capacity that the exhaust gas experiences no or only very slight cooling due to heat exchange with the honeycomb body.

8. An arrangement according to claim 7 **characterised in that** at least the second honeycomb body (5) is formed from at least one at least partially structured metal sheet.

9. An arrangement according to claim 8 **characterised in that** the metal sheet is of a thickness of from 15 to 65 µm, preferably 30 µm.

10. An arrangement according to one of claims 1 to 9 **characterised in that** the second device (3) forms a structural unit.

11. An arrangement according to claim 10 **characterised in that** the first honeycomb body (4) and/or the third honeycomb body (6) is or are connected by means of suitable electrically insulating holding means (7) to the second honeycomb body (5) in such a way that it or they is or are held by the second honeycomb body (5).

12. An arrangement according to claim 1 **characterised in that** the oxygen sensor (10) is connected to a control unit controlling a volume flow of secondary air which is fed into the exhaust gas by way of the secondary air line (9).

13. An arrangement according to one of claims 1 to 12 **characterised in that** there is provided a bypass line (11) through which at least a part of the exhaust gas can be taken past the second device (3), wherein the bypass line (11) has means (12) by which the flow cross-section of the bypass line (11) is variable.

14. An arrangement according to one of claims 1 to 13 **characterised in that** there is provided a temperature measuring device (13), by means of which the temperature of the exhaust gas flow can be measured downstream of the second honeycomb body (5), preferably between the second (5) and the third (6) honeycomb bodies.

15. An arrangement according to one of claims 1 to 14 **characterised in that** opening into an exhaust gas line (14) by which the first device (2) is connected to an internal combustion engine (1) is at least one secondary air line (15) by which secondary air can be fed into the exhaust gas flow.

16. An arrangement according to claim 15 **characterised in that** an oxygen sensor (16) is arranged in the exhaust gas line (14) upstream of the secondary air line (15).

17. An arrangement according to claim 16 **characterised in that** the oxygen sensor (16) is connected to a control unit for controlling mixture formation of the internal combustion engine (1).

18. An arrangement according to one of claims 1 to 17 **characterised in that** the second device (3) is arranged so remote from an internal combustion engine (1), as considered in the direction of flow of the exhaust gas, that the temperature within the second device (3) is substantially below 700°C in substantially all operating conditions of the internal combustion engine (1).

19. A method of operating an arrangement according to one of claims 1 to 18 for converting at least one exhaust gas component from an internal combustion engine (1), in which electrical heating of a first and a third honeycomb body (4, 6) is effected at the latest from starting of the internal combustion engine (1), and in which a stoichiometric ratio of the exhaust gas flow is determined substantially at the inlet into the second device (3) by an oxygen sensor (10) arranged between a secondary air line (9) and the second device (3) and a volume flow of the secondary air is fed to the second device (3) in dependence on a comparison between the determined stoichiometric ratio and a predetermined stoichiometric ratio.

20. A method according to claim 19 in which an actual temperature of the exhaust gas flow is determined downstream of the second honeycomb body (5), preferably between the second (5) and the third (6) honeycomb body, and the electrical heating of the first and/or the third honeycomb body (4, 6) is switched off in dependence on a comparison between the actual temperature and a reference temperature.

21. A method according to claim 19 or claim 20 in which an actual temperature of the exhaust gas flow is determined downstream of the second honeycomb body (5), preferably between the second (5) and the third (6) honeycomb body, and a volume flow of secondary air is fed to the second device (3) in dependence on a comparison between the actual temperature and a reference temperature.

22. A method according to one of claims 19 to 21 in which only a part of the exhaust gas is fed to the second device (3) in dependence on a rotary speed of the internal combustion engine (1).

## Revendications

1. Agencement pour la transformation d'au moins une composante de gaz d'échappement d'un flux de gaz d'échappement d'un moteur à combustion interne (1) comportant un premier dispositif(2) à effet catalytique, un deuxième dispositif(3), qui vu dans le sens de l'écoulement du gaz d'échappement, est agencé en aval du premier dispositif (2), dans quel cas le deuxième dispositif(3) présente dans le sens de l'écoulement du gaz d'échappement l'un derrière l'autre au moins un premier corps en nids d'abeilles (4) pouvant être chauffé électriquement, un deuxième corps en nids d'abeilles (5) qui a au moins un revêtement qui est au moins partiellement au moins adsorbant d'hydrocarbures, et un troisième corps en nids d'abeilles (6) pouvant être chauffé électriquement, **caractérisé en ce que** dans une section de conduite (8), qui relie le premier dispositif (2) au deuxième dispositif (3), au moins une conduite d'air secondaire (9) débouche et un capteur d'oxygène (10) est agencé entre la conduite d'air secondaire (9) et le deuxième dispositif (3).

2. Agencement selon la revendication 1, **caractérisé en ce que** le premier corps en nids d'abeilles (4) présente un revêtement adsorbant au moins des hydrocarbures.

3. Agencement selon la revendication 1 ou 2, **caractérisé en ce que** le premier corps en nids d'abeilles (4) a un revêtement au moins à effet catalytique, qui favorise une oxydation.

4. Agencement selon la revendication 1, 2 ou 3, **caractérisé en ce que** le deuxième corps alvéolaire (5) a un revêtement au moins à effet catalytique qui favorise une oxydation.

5. Agencement selon l'une des revendications 1 à 4, **caractérisé en ce que** le troisième corps en nids d'abeilles (6) a un revêtement au moins à effet catalytique qui favorise une oxydation.

6. Agencement selon l'une des revendications 1 à 4, **caractérisé en ce que** le troisième corps en nids d'abeilles (6) a un revêtement à effet catalytique qui favorise une oxydation et le cas échéant en outre une réduction.

7. Agencement selon l'une des revendications 1 à 6, **caractérisé en ce qu'**au moins le deuxième corps en nids d'abeilles (5) a une capacité d'accumulation de chaleur si basse que le gaz d'échappement ne subit pas de refroidissement ou subit seulement un refroidissement très faible par échange de chaleur avec le corps en nids d'abeilles.

8. Agencement selon la revendication 7, **caractérisé en ce qu'**au moins le deuxième corps en nids d'abeilles (5) est formé d'au moins une tôle, au moins partiellement structurée.

9. Agencement selon la revendication 8, **caractérisé en ce que** la tôle a une épaisseur de 15 à 65 µm, de préférence 30 µm.

10. Agencement selon l'une des revendications 1 à 9, **caractérisé en ce que** le deuxième dispositif (3) forme une unité de construction.

11. Agencement selon la revendication 10, **caractérisé en ce que** le premier corps en nids d'abeilles (4) et/ou le troisième corps en nids d'abeilles (6) est/sont relié(s) de telle manière à l'aide de moyens de retenue électriquement isolants (7) appropriés au deuxième corps en nids d'abeilles que celui-ci ou ceux-ci est/sont retenu(s) par le deuxième corps en nids d'abeilles (5).

12. Agencement selon la revendication 1, **caractérisé en ce que** le capteur d'oxygène (10) est relié à une unité de commande au moyen de laquelle un flux de volume d'un air secondaire est commandé qui est introduit par une conduite d'air secondaire (9) dans le gaz d'échappement.

13. Agencement selon l'une des revendications 1 à 12, **caractérisé en ce qu'**une conduite de dérivation (11) est prévue à travers laquelle au moins une partie du gaz d'échappement peut être dérivée à coté du deuxième dispositif (3), la conduite de dérivation (11) présentant des moyens (12) par lesquels la section transversale d'écoulement de la conduite de dérivation (11) peut être modifiée.

14. Agencement selon l'une des revendications 1 à 13, **caractérisé en ce qu'**un dispositif de mesure de température (13) est prévu au moyen duquel la température du flux de gaz d'échappement est mesurable derrière le deuxième corps en nids d'abeilles (5), de préférence entre le deuxième (5) et le troisième (6) corps en nids d'abeilles.

15. Agencement selon l'une des revendications 1 à 14, **caractérisé en ce que** dans une conduite de gaz d'échappement (14), par laquelle le premier dispositif (2) est relié à un moteur à combustion interne (1), débouche au moins une conduite d'air secondaire (15) par laquelle de l'air secondaire peut être introduit dans le flux de gaz d'échappement.

16. Agencement selon la revendication 15, **caractérisé en ce qu'**un capteur d'oxygène (16) est agencé devant la conduite d'air secondaire (15) dans la conduite de gaz d'échappement (14).

17. Agencement selon la revendication 16, **caractérisé en ce que** le capteur d'oxygène (16) est relié à une unité de commande, au moyen de laquelle une formation de mélange du moteur à combustion interne (1) est commandée.

18. Agencement selon l'une des revendications 1 à 17, **caractérisé en ce que** vu dans le sens de l'écoulement du gaz d'échappement le deuxième dispositif (3) est agencé aussi loin d'un moteur á combustion interne (1) que sous sensiblement toutes les conditions d'opération du moteur à combustion interne (1) la température dans le deuxième dispositif (3) se trouve sensiblement en dessous de 700°C.

19. Procédé pour opérer un agencement selon l'une des revendications 1 à 18 pour la transformation d'au moins une composante de gaz d'échappement d'un moteur à combustion interne (1), dans le cas duquel un chauffage électrique d'un premier et d'un troisième corps en nids d'abeilles (4, 6) est effectué au plus tard à partir du démarrage du moteur à combustion interne (1), dans le cas duquel un rapport stoéchiometrique du flux de gaz d'échappement est sensiblement déterminé à l'entrée dans le deuxième dispositif (3) par un capteur d'oxygène (10) agencé entre une conduite d'air secondaire (9) et le deuxième dispositif (3) et un flux de volume de l'air secondaire est amené au deuxième dispositif(3) en fonction d'une comparaison entre le rapport stoéchiométrique respectif et un rapport stoéchiométrique prédéterminé.

20. Procédé selon la revendication 19, dans le cas duquel une température réelle du flux de gaz d'échappement est déterminée derrière le deuxième corps en nids d'abeilles (5), de préférence entre le deuxième (5) et le troisième (6) corps en nids d'abeilles et le chauffage électrique du premier et/ou du troisième corps en nids d'abeilles (4, 6) est arrêté en fonction d'une comparaison entre la température réelle et une température désirée.

21. Procédé selon la revendication 19 ou 20, dans le cas duquel une température réelle du flux de gaz d'échappement est déterminée derrière le deuxième corps en nids d'abeilles (5), de préférence entre le deuxième (5) et le troisième corps en nids d'abeilles (6) et un flux de volume d'un air secondaire est amené au deuxième dispositif (3) en fonction d'une comparaison entre la température réelle et une température désirée.

22. Procédé selon l'une des revendications 19 à 21, dans le cas duquel en fonction de la vitesse de rotation du moteur à combustion interne (1) uniquement une partie du gaz d'échappement est amenée au deuxième dispositif (3).
